# FASCICULE DE BREVET EUROPEEN

(11) **EP 0 659 610 B1**
(45) Date de publication et mention de la délivrance du brevet: **04.03.1998**
(21) Numéro de dépôt: 94118976.3
(22) Date de dépôt: 02.12.1994
(51) Int. Cl.: B60R 1/06

(54) **Dispositif de réglage autoadaptif d'un rétroviseur à commande électrique**
Selbstanpassende Regelungsvorrichtung für einen elektrisch betätigten Rückspiegel
Autoadaptive adjusting device for rear view mirror with electrical control

(30) Priorité: 23.12.1993 FR 9315575
(43) Date de publication de la demande: 28.06.1995
(73) Titulaire: VALEO ELECTRONIQUE, 94000 Creteil (FR)
(72) Inventeur: Boucheron, Jean-Louis, F-77176 Savigny Le Temple (FR)
(74) Mandataire: Gamonal, Didier

(56) Documents cités:
- FR-A- 2 644 015
- US-A- 4 749 927
- US-A- 5 194 789
- PATENT ABSTRACTS OF JAPAN vol. 16, no. 274 (M-1267) 19 Juin 1992 & JP-A-04 069 132 (MITSUBISHI ELECTRIC) 4 Mars 1992
- PATENT ABSTRACTS OF JAPAN vol. 4, no. 67 (E-011) 20 Mai 1980 & JP-A-55 037 865 (FUJITSU TEN) 17 Mars 1980

## Description

La présente invention concerne un dispositif de réglage auto-adaptatif d'un rétroviseur à commande électrique. Elle concerne aussi un rétroviseur comportant un dispositif de positionnement automatique sur deux positions distinctes selon les dispositions de conduite, qui met en oeuvre le dispositif de réglage de l'invention.

Dans l'art antérieur, comme décrit par exemple dans US-A-5 194 789, le réglage de l'orientation d'un rétroviseur est une fonction accessible au conducteur d'automobile. Le réglage de l'orientation est réalisé par l'utilisation de moteurs électriques entraînant la rotation du miroir du rétroviseur suivant un axe vertical et/ou un axe horizontal en général. Ce dispositif de réglage comprend en outre des moyens de mesure et un panneau de commande accessible à un utilisateur qui sont connectés à un organe de commande qui élabore au moins un signal de commande des circuits d'alimentation des moteurs.

Afin de permettre à l'utilisateur de procéder à un réglage précis de la position du rétroviseur, il est nécessaire que la vitesse de variation de la position du miroir soit lente (par exemple 2 à 3 degrés par seconde).

Il est par ailleurs souhaitable que cette vitesse soit constante. Or, ce n'est pas toujours le cas en milieu automobile, compte tenu notamment des variations possibles de la tension délivrée par la batterie.

La présente invention utilise une méthode de commande des moteurs électriques par une modulation d'impulsions à largeur variable (PWM), dans laquelle les variations de la tension batterie sont corrigées par modification du facteur de forme de la modulation. Pour cela des moyens permettent de modifier la largeur de modulation T1 du facteur de forme qui est en fait le rapport T1/T où T est constant défini par la période de la modulation.

Cette solution présente de bonnes performances du point de vue des variations de la tension batterie, mais comporte certaines limites vis-à-vis des dispersions de consommation sur les moteurs, notamment dues aux mécaniques associées.

En effet, les mécanismes mis en jeu pour le réglage du rétroviseur peuvent présenter des points durs ou provoquer des blocages par grippage mécanique et faire qu'avec la tension de commande prédéfinie, le moteur ne puisse mouvoir le miroir du rétroviseur.

L'invention porte remède à ces inconvénients de l'état de la technique.

En effet, la présente invention concerne un dispositif de réglage de l'orientation d'un rétroviseur selon la revendication 1. Le dispositif comporte en outre
- au moins un moyen d'entraînement électrique comme un moteur électrique ;
- un moyen de mesure de la tension de la batterie qui produit un signal représentatif de la tension batterie ;
- un moyen de mesure des variations du couple résistant exercé sur ledit moteur, qui produit au moins un signal de mesure des variations de couple ;
- un panneau de commande accessible à un utilisateur, qui produit au moins un signal de commande de réglage ;
qui sont connectés à un organe de commande, qui élabore au moins un signal de commande des circuits d'alimentation du ou des moteurs sur la base d'une information de commande déterminée par ledit organe de commande, afin de régler l'alimentation dudit moyen d'entraînement, l'organe de commande comportant au moins un moyen pour déterminer le signal de commande sous la forme d'un signal en modulation en largeur d'impulsions, destiné à piloter des circuits d'alimentation du ou des moteurs électriques, le facteur de forme de la modulation en largeur d'impulsions étant une fonction du signal de mesure de la tension batterie et du signal de mesure des variations de la vitesse du moteur.

Ce signal de commande est portée par le facteur de forme d'une modulation d'impulsions à largeur variable qui est utilisée pour le découpage de la tension d'alimentation dudit dispositif, comme par exemple la tension délivrée par la batterie du véhicule, pour générer une commande de puissance pour ledit moyen d'entraînement de la partie mobile du rétroviseur.

L'invention se caractérise en ce que l'organe de commande comporte au moins une mémoire dans laquelle sont enregistrées des tables de valeurs du facteur de forme adressables en fonction respectivement de la variation de la vitesse du moteur et de la valeur de la tension batterie.

Le rétroviseur comporte une partie mobile et une partie fixe telles que ladite partie mobile est montée sur ladite partie fixe par l'intermédiaire d'au moins un arbre de telle façon que le mouvement de ladite partie mobile par rapport à ladite partie fixe soit un mouvement de rotation. Dans le cas non limitatif d'un rétroviseur de véhicule, la partie mobile du rétroviseur peut être constituée par un miroir monté par l'intermédiaire d'au moins un arbre sur le corps du rétroviseur fixé à la carcasse du véhicule. Bien souvent un système de liaison par un couple d'arbres offrant une possibilité de rotation du miroir autour de deux axes différents assure un réglage suffisant de l'orientation dudit miroir.

Selon une autre caractéristique de l'invention, une variation du couple résistant exercé sur le moteur par l'ensemble des mécanismes du rétroviseur, est détectée par une variation contraire de la vitesse de déplacement du miroir entraîné par ledit moteur, par rapport à une vitesse de déplacement prédéterminée.

Selon une autre caractéristique de l'invention, l'organe de commande comporte un convertisseur analogique numérique qui reçoit un signal de mesure de la position instantanée du miroir, ce signal étant produit par au moins un capteur de position, et comporte un organe de calcul qui produit une information de vitesse de déplacement du miroir qui est communiquée à l'entrée d'un circuit générateur d'un premier signal d'adressage mémoire pour accéder à une plage de valeurs du facteur de forme, destinées à fournir une tension d'alimentation au moteur qui produit un déplacement du miroir à vitesse sensiblement constante, égale à ladite vitesse de déplacement prédéterminée, tant que le signal de commande considéré est actif et tant qu'une condition de fin de course n'est pas vérifiée par l'organe de commande.

Selon une autre caractéristique de l'invention, l'organe de commande comporte un convertisseur analogique numérique qui reçoit le signal représentatif de la tension batterie et qui produit un signal de mesure de la tension batterie qui est connecté à l'entrée d'un circuit générateur d'un second signal d'adressage mémoire pour accéder à une plage de valeurs du facteur de forme destinées à fournir une tension d'alimentation au moteur qui soit indépendante de la valeur de la tension batterie.

Ainsi, pour une charge du moteur déterminée, le facteur de forme de la modulation d'impulsions à largeur variable suit les variations de la tension de la batterie selon une première loi prédéterminée connue du dispositif de réglage notamment sous la forme de l'ensemble des valeurs, appelé table de valeurs, d'une première dimension de variation d'un ensemble de valeurs comportant deux dimensions de variations et sauvegardé dans une mémoire inscriptible, alors que pour une tension de la batterie déterminée, le facteur de forme de ladite modulation suit les variations de la vitesse du moteur selon une seconde loi prédéterminée et connue du dispositif de réglage notamment sous la forme de l'ensemble des valeurs d'une seconde dimension de variation dudit ensemble de valeurs.

Selon une autre caractéristique de l'invention, les valeurs du facteur de forme de la modulation suivent une loi décroissante avec la tension de la batterie.

En effet, si pour une valeur du couple moteur déterminée, la valeur de la tension délivrée par la batterie vient à augmenter par rapport à une valeur précédente, la valeur du facteur de forme est diminuée, de manière à ce que, après découpage par un signal issu d'une modulation selon un tel nouveau facteur de forme, la nouvelle tension de la batterie fournisse une tension d'alimentation inchangée pour le moteur d'entraînement du miroir. Dans le cas contraire d'une chute de la valeur de la tension délivrée par la batterie la valeur est augmentée du facteur de forme de la modulation afin de garantir une tension d'alimentation toujours inchangée.

Selon une autre caractéristique de l'invention, les valeurs du facteur de forme de la modulation suivent une loi décroissante avec les valeurs de la vitesse de déplacement du miroir.

En effet, si pour une tension de la batterie déterminée, la valeur de la charge du moteur, c'est-à-dire du couple résistant exercé par l'ensemble des mécanismes du rétroviseur sur le moteur d'entraînement du miroir, vient à augmenter par rapport à une valeur précédente, entraînant ainsi une diminution de la vitesse de déplacement du rétroviseur par rapport à une vitesse de référence déterminée, la valeur du facteur de forme est augmentée, de manière à ce que, après découpage de la nouvelle tension de batterie par un signal issu d'une modulation selon un tel nouveau facteur de forme, la tension d'alimentation reste inchangée pour le moteur d'entraînement du miroir. Par contre, dans le cas d'une chute de la valeur de la charge moteur, entraînant ainsi une augmentation de la vitesse de déplacement du rétroviseur par rapport à une vitesse de référence déterminée, la valeur du facteur de forme de la modulation diminue afin de garantir une tension d'alimentation pour le moteur d'entraînement toujours inchangée. Cette caractéristique procure l'avantage de garantir une commande en puissance du moteur de positionnement qui soit adaptée aux variations de la tension de la batterie et des variations de la charge dudit moteur pour assurer une vitesse de déplacement du miroir du rétroviseur constante.

Selon une autre caractéristique de l'invention, les variations de la vitesse de déplacement du miroir du rétroviseur sont détectées par un test consistant à vérifier si pendant un intervalle de temps déterminé, défini comme la durée nécessaire pour obtenir, à la vitesse de déplacement désirée, une variation de un bit de la valeur numérisée de l'information de recopie de la position du miroir et qui est contrôlée par l'intermédiaire d'un convertisseur analogique/digital, ladite valeur numérisée a effectivement varié de un bit.

Selon une autre caractéristique de l'invention, le dispositif de réglage du rétroviseur comporte au moins un capteur de la position du miroir du rétroviseur par rapport à une partie fixe dudit rétroviseur.

Selon une autre caractéristique de l'invention, le capteur de la position du miroir du rétroviseur, est un capteur de l'angle existant entre un axe dudit miroir et un axe de ladite partie fixe du rétroviseur, comme un potentiomètre dont la valeur résistive est liée à la valeur dudit angle.

La présente invention concerne aussi un rétroviseur comportant un moyen d'entraînement électrique comme un rétroviseur d'automobile, du type comportant un dispositif de commande électrique permettant le positionnement du miroir (6) à une première vitesse dite vitesse rapide, sur deux positions distinctes qui sont, une première position dite position normale de marche avant, et une seconde position dite position de marche arrière, et qui se caractéris en ce que le réglage de ces deux positions est effectué, à une seconde vitesse, dite vitesse lente car elle est plus lente que ladite première vitesse, par un dispositif de réglage tel que celui décrit ci-dessus.

Dans la pratique, il existe en effet deux situations principales de conduite, qui sont, d'une part une situation de conduite sur route pour laquelle l'ensemble des rétroviseurs sont disposés selon une première position, par exemple adaptée à renseigner le conducteur sur la présence et/ou l'approche d'autres véhicules dans une zone assez large autour de son propre véhicule (par exemple dans un rayon de plusieurs mètres autour de son véhicule et dans un couloir pouvant atteindre plusieurs centaines de mètres en arrière sur la chaussée) , et, d'autre part, une situation de manoeuvre pendant laquelle le conducteur a besoin de pouvoir déceler la présence d'obstacles aux abords immédiats de son véhicule, ce qui requiert une disposition des rétroviseurs selon une seconde position, par exemple adaptée à la surveillance de la zone du sol située immédiatement au bord de son véhicule (dans un rayon d'un mètre, par exemple).

Cette seconde position est particulièrement requise pour le rétroviseur externe disposé du côté passager d'un véhicule X1, dans la mesure où il renseigne le conducteur lorsque celui-ci est en train de garer son véhicule.

Selon une autre caractéristique de l'invention, le dispositif de commande du positionnement du rétroviseur comporte des moyens pour passer automatiquement de la position normale de marche avant à la position de marche arrière, et réciproquement.

Pour que cette fonction soit efficace, il est nécessaire que la période de transition due au passage d'une position à une autre soit courte, ceci conduit à utiliser un moteur de positionnement du rétroviseur associé, conçu pour donner une vitesse d'approche rapide (par exemple capable d'assurer le mouvement de rotation du miroir à une vitesse de 13° par seconde).

En contrepartie, lorsque l'utilisateur désire effectuer un réglage de l'une ou l'autre de ces deux positions, il est nécessaire que la vitesse de déplacement du miroir du rétroviseur soit lente (par exemple 2 à 3° par seconde) et constante, faute de quoi il ne sera pas possible de régler le rétroviseur avec précision.

Afin d'assurer des conditions de réglage de la position du miroir du rétroviseur qui soient indépendantes des variations de la tension de la batterie et des variations du couple résistant appliqué aux moteurs par les mécanismes du rétroviseur, un dispositif de réglage auto-adaptatif selon l'invention est utilisé.

Selon une autre caractéristique de l'invention, le rétroviseur comporte au moins un moyen de détection de l'enclenchement de la vitesse "Marche-Arrière", le passage de la position normale de marche avant à la position de marche arrière se faisant automatiquement dès que la vitesse "Marche-Arrière" est sollicitée par le conducteur, et, inversement, le passage de la position de marche arrière à la position normale de marche avant se faisant automatiquement dès que la vitesse "Marche-Arrière" n'est plus sollicitée.

D'autres caractéristiques et avantages de l'invention apparaîtront lors de l'analyse des dessins qui sont :
- figure 1 : schéma global du dispositif de réglage d'un rétroviseur, selon le principe de l'invention.
- figure 2 : diagramme de variation du facteur de forme de la modulation en fonction de la tension de la batterie et de la charge du moteur.
- figure 3 : une partie d'un algorithme de fonctionnement de l'organe de commande du dispositif de réglage selon l'invention, concernant notamment le contrôle de la vitesse de mouvement du miroir du rétroviseur vis-à-vis des variations de la charge moteur.

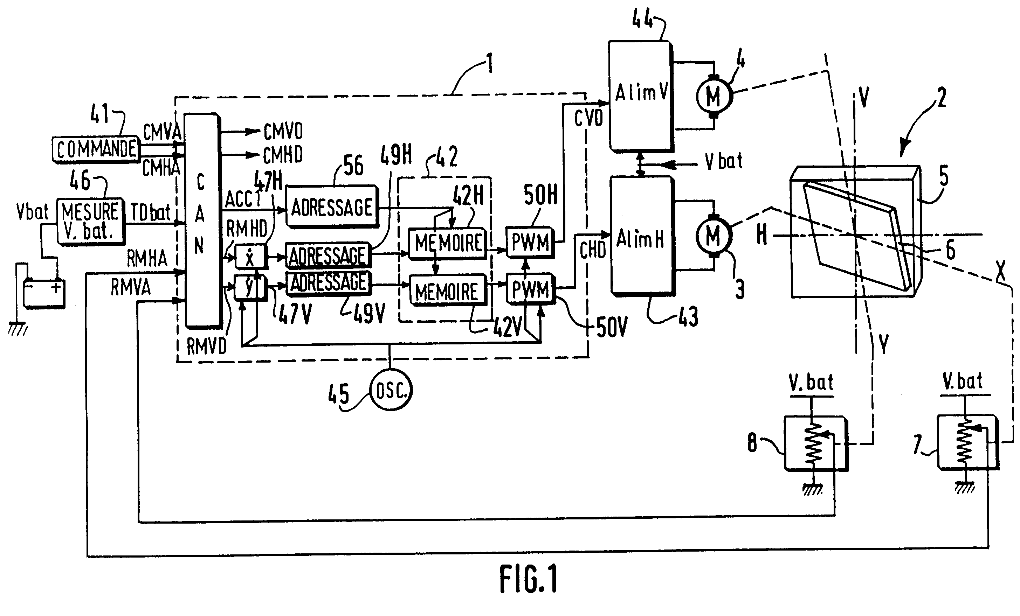

A la figure 1, on a représenté un schéma global du dispositif de réglage d'un rétroviseur 2 de moteurs de déplacement 3,4 et de leurs alimentations 43 et 44, d'un organe de commande 1. Ce rétroviseur 2 comporte une partie fixe 5 et une partie mobile 6 comme par exemple un miroir, reliées par l'intermédiaire d'au moins un arbre de telle manière que ladite partie mobile 6 peut entrer en mouvement par rapport à ladite partie fixe 5.

Selon un mode de réalisation préféré de l'invention, la partie mobile 6 possède deux degrés de liberté, tels que son mouvement par rapport à la partie fixe 5 est un mouvement de rotation suivant un premier axe dit axe vertical et/ou suivant un second axe dit axe horizontal. La description qui suit, en référence à la figure 1, est une explication du fonctionnement du dispositif de réglage de l'invention appliqué à un tel rétroviseur, mais ne constitue nullement une restriction de la portée de l'invention à un tel type de rétroviseurs.

En particulier, on peut envisager une liaison de la partie mobile 6 sur la partie fixe 5 par l'intermédiaire d'une rotule entraînée en rotation autour d'un axe unique mais qui, de par sa forme et de par la forme de la cavité dans laquelle elle vient se loger, peut entraîner la partie mobile 5 dans un déplacement plus complexe. Un rétroviseur équipé d'une telle liaison des parties fixe et mobile peut bien sûr comporter un dispositif de réglage auto-adaptatif selon l'invention.

L'organe de commande 1 comporte deux entrées de commande CMHA et CMVA accessibles par l'utilisateur. Suivant un mode de réalisation possible de l'invention, ces deux commandes sont délivrées respectivement par un contacteur de commande de réglage horizontal et un contacteur de commande de réglage vertical, disposés sur un panneau de commande 41 et actionnables manuellement par le conducteur du véhicule. Les contacteurs délivrent des signaux CMHA et CMVA reconnaissables par l'organe de commande 1.

L'organe de commande 1 comporte de plus un moyen de mesure 46 de la tension de la batterie Vbat, qui est adapté à fournir un signal analogique TDbat représentatif de la tension disponible.

Par ailleurs, le dispositif de réglage comporte deux entrées RMHA et RMVA adaptées à recevoir deux informations analogiques de recopie, représentatives respectivement de la position d'un premier axe X de la partie mobile 6 du rétroviseur par rapport à un premier axe H, ou axe horizontal de la partie fixe 5 du rétroviseur, et de la position d'un second axe Y de la partie mobile 6 du rétroviseur par rapport à un second axe V, ou axe vertical de ladite partie fixe 5.

L'ensemble des entrées CMHA, CMVA, TDbat, RMHA et RMVA sont connectées à un convertisseur analogique/digital CAN pour produire les signaux numériques équivalents, respectivement CMHD, CMVD, ACC1, RMHD et RMVD qui sont exploitables par le reste du dispositif de réglage.

Après un traitement dont le détail est donné plus loin, l'organe de commande 1 délivre un premier signal de commande CHD à un premier organe d'alimentation 43 d'un premier moteur 3 de positionnement horizontal du miroir 6 du rétroviseur 2, et un second signal de commande CVD à un second organe d'alimentation 44 d'un second moteur 4 de positionnement vertical dudit miroir 6.

Dans un mode de réalisation préféré de l'invention, les tensions de commande qui sont transmises aux moteurs 3 et 4 sont directement les tensions d'alimentation en puissance desdits moteurs 3 et 4, comme des moteurs à courant continu. Les tensions d'alimentation des moteurs 3 et 4 résultent du découpage de la tension d'alimentation du dispositif de réglage c'est-à-dire de la tension de la batterie Vbat, selon une information de commande portée par les signaux CHD et CVD.

Dans le mode de réalisation de l'invention, ledit découpage de la tension de la batterie Vbat produit des signaux CHD et CVD sous la forme de suites d'impulsions modulées, du type résultant d'une modulation d'impulsions à largeur variable, dont le facteur de forme est déterminé par l'organe de commande 1.

Dans le mode de réalisation préféré, représenté à la figure 1, le miroir 6 possède deux degrés de liberté permettant son déplacement autour de deux axes différents.

Un seul organe de commande du type de l'organe de commande 1 est utilisé pour le réglage de la position horizontale du miroir 6 et pour celui de sa position verticale alternativement.

Dans un autre mode de réalisation de l'invention, les signaux de commande numérisés CMHD et CMVD activent à tour de rôle un sélecteur des moyens de l'organe de commande 1 qui sont nécessaires à l'un seulement des réglages horizontal ou vertical. L'un seulement des organes d'alimentation 43 ou 44 des moteurs 3 ou 4 est alors activé à chaque fois.

Dans un autre mode de réalisation de l'invention, l'organe de commande exécute le réglage simultané de la position horizontale et de la position verticale du miroir 6.

Dans ce cas, le moyen générateur 50 de la modulation d'impulsions à largeur variable PWM doit être dupliqué afin que les deux voies horizontale et verticale puissent être commandées en propre et en même temps.

Le détail du fonctionnement de l'organe de commande 1 est maintenant donné dans le cadre du dispositif de réglage de la figure 1.

Sur la base de l'information sur la position angulaire du miroir 6 par rapport à la partie fixe 5 du rétroviseur, qui est portée par les signaux RMHD et RMVD, deux organes de calcul 47 et 48 sont adaptés à produire une information sur la vitesse de déplacement, respectivement horizontal et vertical du miroir 6.

Ces deux organes de calcul 47 et 48 disposent de moyens pour surveiller si pendant un intervalle de temps déterminé, l'orientation respectivement horizontale et verticale du miroir 6 a varié d'une grandeur correspondant à la variation attendue pendant ledit intervalle de temps et à la vitesse de déplacement désirée.

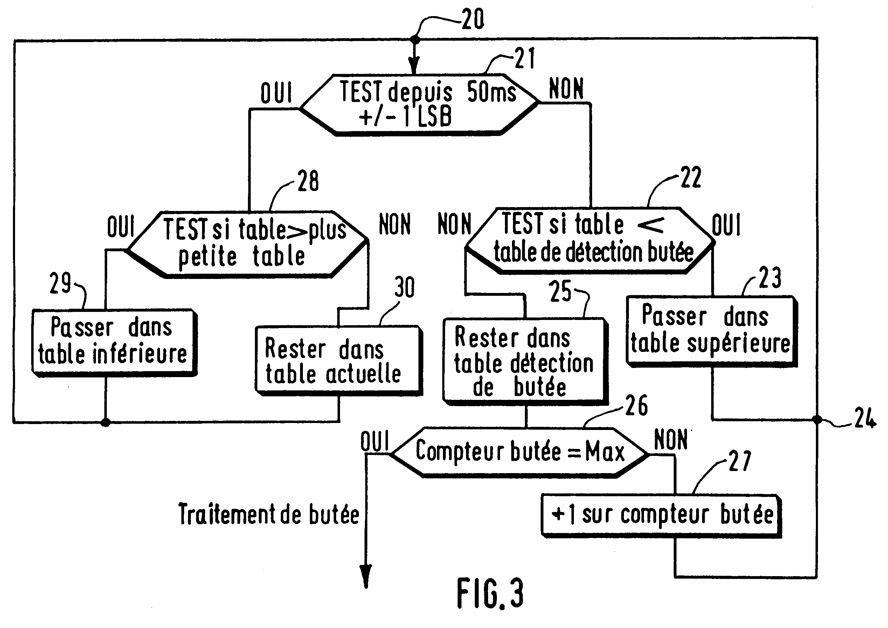

Ces moyens de surveillance sont précisés avec la description de la figure 3.

Les organes de calcul 47 et 48 requièrent une base de temps qui leur est fournie sous forme d'un signal d'horloge par des moyens 45 comme un oscillateur à fréquence fixe. Ce même oscillateur 45 est connecté au modulateur 50 de la modulation d'impulsions à largeur variable PWM.

L'organe de calcul 47H (respectivement 47V) génèrent une information sur le signe de la différence entre la vitesse de déplacement horizontale du miroir (respectivement verticale) qui est mesurée et la vitesse de déplacement désirée. Cette information est ensuite transmise à un premier module d'adressage 49H (respectivement 49V) qui génère un premier signal d'adressage mémoire permettant d'accéder à une plage de valeurs du facteur de forme, destinées à réduire ladite différence.

Un second organe d'adressage 56, recevant une information ACC1 sur la valeur de la tension fournie par la batterie Vbat génère un second signal d'adressage mémoire permettant d'accéder à une plage de valeurs du facteur de forme, destinées à fournir une tension d'alimentation aux moteurs 3 ou 4 qui soit indépendante de la valeur de la tension batterie Vbat.

La combinaison des premier et second signaux d'adressage mémoire permet d'accéder dans une mémoire 42H (respectivement 42V) d'une mémoire non volatile, à une unique valeur du facteur de forme qui est adaptée, et à réduire la différence entre la vitesse de déplacement du miroir qui est mesurée et la vitesse désirée, et à fournir une tension d'alimentation aux moteurs 3 ou 4 qui soit indépendante de la valeur de la tension batterie Vbat.

Ladite valeur du facteur de forme est ensuite transmise à un modulateur 50H (respectivement 50V) opérant une modulation du signal d'horloge issu de l'oscillateur 45, du type d'une modulation d'impulsions à largeur variable PWM.

Ce signal ainsi modulé constitue les commandes CHD et CVD des organes d'alimentation 43 et 44 des moteurs d'entraînement 3 et 4, ainsi qu'il a été vu précédemment.

Selon un mode de réalisation préféré de l'invention, les capteurs d'indexation 7 et 8 sont des potentiomètres. Chaque potentiomètre comporte un curseur dont le déplacement sur la piste résistive du potentiomètre est produit par le mouvement de rotation du miroir 6 autour de son axe X ou Y. Les points de mesure des capteurs, pris sur les curseurs des potentiomètres sont connectés aux entrées RMHD et RMVD de l'organe de commande 1.

Selon un mode de réalisation préféré de l'invention, l'organe de calcul 1 est constitué par un microcontrôleur comportant des moyens de conversion analogique/numérique adaptés au contrôle des entrées, notamment des entrées CMHA, CMVA, TDbat, RMHA et RMVA, et est piloté par un algorithme de fonctionnement dont une partie fait l'objet de la figure 3.

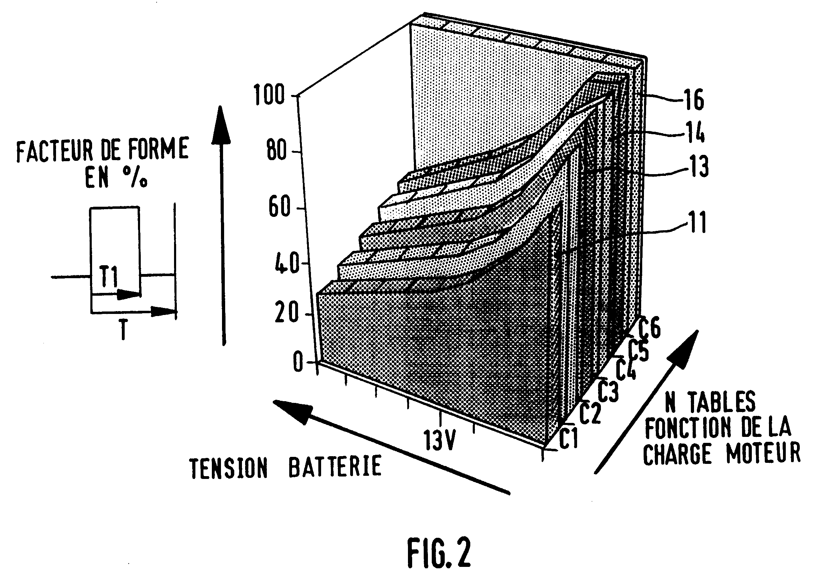

A la figure 2, un diagramme à trois dimensions permet de représenter un exemple de variations du facteur de forme de la modulation à largeur variable. Dans le mode de réalisation préféré, le facteur de forme retenu est exprimé comme le rapport du temps T1 pendant lequel l'impulsion modulée est à son état haut, sur la période T de la modulation, ce rapport étant exprimé en pourcentage.

Les valeurs que peut prendre le facteur de forme sont indicées par deux grandeurs représentatives, respectivement, de la tension batterie Vbat et de la charge moteur, c'est-à-dire du couple résistant exercé par les mécanismes du rétroviseur 2.

Pour des raisons de clarté dans les explications qui vont suivre, l'ensemble des valeurs que peut prendre le facteur de forme pour une valeur de la charge moteur déterminée est appelé table de valeurs. Lorsque la valeur de la charge moteur varie, on dit que le dispositif de réglage sélectionne une autre table pour en tirer une nouvelle valeur du facteur de forme. Une table telle que définie ci-dessus est enregistrée en mémoire 42 et adressée par le premier signal d'adressage mémoire produit par les organes de calcul 47H (ou 48V) connectés au premier module d'adressage 49H (ou 49V) du mode de réalisation préféré de la figure 1.

Dans un mode de réalisation de l'invention, ces valeurs sont sauvegardées dans une mémoire séquentielle à accès direct, et sont accessibles par l'intermédiaire d'une adresse unique.

A la figure 2, sur un premier axe, on considère un nombre de N tables différentes dans lesquelles l'organe de commande 1 vient chercher les valeurs du facteur de forme, chaque table correspondant à un intervalle de variation de la charge moteur, c'est-à-dire aussi du couple résistant qui est exercé sur le moteur par l'ensemble des mécanismes mis en jeu dans le dispositif d'orientation du miroir du rétroviseur. Pour des raisons de clarté, les différents pavés du graphique qui correspondent aux N tables différentes ont été représentés de façon disjointe, bien que toute valeur de la charge moteur soit associée en réalité à au moins une table de valeurs du facteur de forme de la modulation.

Si l'on se place à charge déterminée C1, et si la tension d'alimentation augmente, la valeur du facteur de forme diminue selon une loi de variation déterminée par l'ordonnancement des valeurs contenues dans une table donnée 11.

Si, toujours à la même charge déterminée C1, la valeur de la tension de la batterie diminue, le facteur de forme augmente suivant la même loi de variation prise en sens contraire, car l'organe de calcul continue de rechercher les valeurs du facteur de forme dans la même table 11 en fonction de la valeur de la tension de la batterie.

Si l'on se place maintenant à une tension de batterie déterminée, égale à 13 V par exemple, et que la charge moteur passe d'une première valeur C3 à une seconde valeur C4, l'organe de commande cesse de considérer la table 13 pour rechercher la valeur à donner au facteur de forme et sélectionne la table 14 pour le faire. Ainsi, la valeur du facteur de forme saute d'une première valeur définie dans la table 13 pour une valeur de la tension batterie égale à 13 V, à une seconde valeur définie dans la table 14 pour la même valeur de tension de la batterie, c'est à dire 13 V dans cet exemple.

Lorsque le couple résistant exercé par l'ensemble des mécanismes du rétroviseur sur le moteur dépasse une valeur déterminée, c'est à dire lorsque la charge moteur devient supérieure à une valeur C6 donnée, l'organe de commande détecte que le mouvement du miroir du rétroviseur rencontre une résistance telle que la tension d'alimentation du dispositif ne doit plus être modulée, ceci afin de délivrer une puissance de commande maximale destinée à vaincre la résistance mécanique, notamment si celle-ci provient d'un point dur dans le dispositif d'entraînement du miroir. Dans ce cas, le facteur de forme est défini égal à 100%, ce qui équivaut à supprimer le découpage de tension batterie Vbat.

Si l'état de résistance mécanique persiste, l'organe de commande détecte que le moteur rencontre un obstacle mécanique infranchissable, et déclenche le traitement approprié. C'est notamment ce qui se passe lorsque le moteur arrive en butée.

On comprend donc que le passage d'une première table de valeurs à une seconde table de valeurs, consécutif à une augmentation de la charge du moteur, est motivé par le fait que ladite seconde table produit des valeurs du facteur de forme qui sont supérieures à celles que produit ladite première table à valeurs égales de la tension batterie.

Par suite, on considère une relation d'ordre sur les tables de valeurs, et on parle ainsi d'une seconde table de valeurs qui est supérieure à ladite première table de valeurs.

De plus, l'ensemble ordonné des tables de valeurs comporte une table maximale 16, dite table de butée, qui est la table donnant un facteur de forme constant égal à 100% quelle que soit la valeur de la tension de la batterie. Cette table de butée est sélectionnée lorsque le moteur rencontre une résistance mécanique persistante et l'on dit alors que le dispositif est en mode de détection de butée. Dans la pratique, le dispositif comporte des moyens qui seront décrits plus bas, pour détecter une station prolongée dans le mode de détection de butée. Si une telle situation se présente, c'est que le moteur d'entraînement ne parvient pas à vaincre le couple mécanique résistant qui lui est appliqué, ceci malgré une commande en puissance qui est maximale. L'organe de commande détecte que ledit moteur rencontre un point mécanique infranchissable, appelé aussi point dur ou point de grippage. C'est le cas par exemple lorsque le dispositif mécanique arrive en butée, d'où le nom de ce mode de fonctionnement du dispositif de réglage.

A la figure 3, est représenté un schéma d'une partie de l'algorithme qui pilote l'organe de commande du dispositif de réglage objet de l'invention, notamment dans sa partie concernant le contrôle de la vitesse de déplacement du miroir du rétroviseur vis-à-vis des variations de la charge moteur.

L'organe de commande reçoit, d'un moyen 45 visible à la figure 1, un signal d'horloge utilisé pour le séquencement de cet algorithme. De plus, comme cela est visible sur la figure 1, l'organe de commande comporte des entrées RMHD et RMVD adaptées à recevoir des informations sur l'indexation du miroir du rétroviseur respectivement suivant un axe horizontal et un axe vertical, c'est-à-dire une mesure de l'angle d'inclinaison du miroir par rapport à l'un quelconque de ces deux axes.

Or, la grandeur que l'organe de commande asservit est la vitesse de déplacement dudit miroir lors du réglage par rotation autour de cet axe horizontal ou de cet axe vertical. L'organe de commande surveille donc les variations de l'indexation horizontale et de l'indexation verticale du miroir opérées pendant un intervalle de temps donné, ce qui équivaut à surveiller la vitesse de ces indexations. La vitesse étant une mesure de la charge moteur, le dispositif de réglage comporte donc un moyen de mesure du couple résistant exercé sur le moteur. Le moyen de mesure produit donc un signal de mesure des variations du couple résistant sous la forme du signal de recopie RMHA provenant du détecteur 7 (ou RMVA du détecteur 8 si on a un second moteur etc.).

Pour plus de simplicité, le fonctionnement de l'algorithme de la figure 3 est maintenant expliqué dans le cas où il est appliqué au contrôle d'une seule des vitesses de variation de l'indexation du miroir, par exemple de la vitesse de l'indexation du miroir par rapport à l'axe horizontal, dans la mesure où il s'agit du même algorithme qui est appliqué au contrôle des variations de l'indexation du miroir par rapport à l'axe vertical.

L'information de recopie de l'indexation horizontale du miroir, portée sur l'entrée RMHD de l'organe de commande, est numérisée par passage par un convertisseur analogique/numérique CAN intégré à l'organe de commande 1. L'organe de commande opère un premier test 21 consistant à déterminer si la valeur numérisée de l'information de recopie de l'indexation horizontale du miroir a varié d'au moins un digit (LSB) pendant un intervalle de temps prédéterminé.

Cet intervalle de temps est défini par la durée nécessaire pour obtenir la vitesse de déplacement souhaitée sachant que pendant cette durée et à cette vitesse de déplacement, la valeur contrôlée par l'intermédiaire du convertisseur analogique digital CAN de la tension délivrée par le potentiomètre de recopie 7 doit changer de un digit. Dans un exemple de réalisation, on souhaite asservir le dispositif de réglage de façon que le mouvement du miroir se fasse à une vitesse de 2 degrés par seconde, ce qui correspond à une variation d'un digit de la valeur numérisée de l'information d'indexation toutes les 50 ms.

Si la vitesse de rotation du miroir est trop faible, alors la réponse au test 21 est "non", ce qui est le cas lorsqu'un couple résistant important est appliqué au moteur. Dans ce cas, l'organe de commande sélectionne une table de valeurs supérieure, au sens de la relation d'ordre définie précédemment, de façon à augmenter la valeur du facteur de forme et augmenter ainsi l'amplitude de la commande en puissance alimentant le moteur.

Ceci conduit à effectuer un test 22 qui consiste à déterminer si la table de valeurs sélectionnée est inférieure à la table de butée. Dans l'affirmative, l'organe de commande sélectionne une table supérieure qui donne une valeur de commande plus grande, susceptible de faire vaincre l'augmentation du couple résistant par le moteur. On se trouve alors au point 24 de l'algorithme et, de là, on reboucle sur la position de départ 20. Dans la négative au contraire, aucune augmentation de la valeur de la commande ne peut être obtenue, l'étape 25 de l'algorithme maintient alors la table de butée sélectionnée, puisque c'est celle qui donne la valeur maximale pour la commande. Le dispositif entre alors en mode détection de butée, en bouclant sur un test 26 consistant à déterminer si un compteur de butée a atteint une valeur maximale prédéfinie.

Si la réponse à ce test 26 est positive, l'algorithme enclenche un traitement de butée qui comporte notamment l'arrêt de l'alimentation en puissance du moteur afin d'éviter une surchauffe pouvant entraîner sa destruction, et qui comporte aussi une réinitialisation du compteur de butée. Ces opérations de traitement de butée ne sont pas représentées ici.

Si au contraire la réponse au test 26 est négative, l'algorithme procède à l'incrémentation 27 dudit compteur de butée, puis reboucle sur le point de départ 20.

Par ailleurs, le compteur de butée est réinitialisé lorsque le dispositif dessélectionne la table de butée en phase normale de fonctionnement, ce qui peut par exemple se produire lorsque le moteur d'entraînement vient de vaincre un point dur qui avait entraîné la sélection de la table de butée.

Si la vitesse de rotation du miroir est trop forte, ce qui est le cas par exemple lorsque les mécanismes du dispositif de réglage viennent de franchir un point dur ayant entraîné la sélection d'une table de valeurs supérieure à la normale, la réponse au test 21 est "oui", et le dispositif de commande essaie alors de sélectionner une table de valeurs inférieure.

C'est l'objet du test 28 que de déterminer si une telle table existe. Si oui, cette table est sélectionnée ce qui constitue l'étape 29 de l'algorithme. Si non, l'algorithme préfère rester dans le même état de sélection (étape 30) car la table qui était déjà sélectionnée est alors celle qui donne la commande la plus petite possible. Dans les deux cas, l'algorithme reboucle sur son point de départ 20.

La présente invention ne se limite pas au cas du réglage d'un dispositif mécanique sous une contrainte de vitesse de déplacement dudit dispositif mécanique qui soit constante. Cet aspect de l'invention n'est que celui retenu dans le cadre du réglage d'un rétroviseur comportant une commande électrique.

Le principe d'une commande auto-adaptative selon l'invention peut être avantageusement repris dans le cadre du réglage d'un dispositif mécanique sous une contrainte de vitesse de déplacement dudit dispositif mécanique qui obéisse à toute autre loi prédéterminée.

De plus, le principe de commande auto-adaptative selon l'invention peut être avantageusement utilisé pour un autre type d'utilisation qu'un réglage. Il peut par exemple être repris pour toute commande de l'entraînement d'un dispositif mécanique à une vitesse de déplacement dudit dispositif mécanique obéissant à tout type de loi prédéterminée.

## Revendications

1. Dispositif de réglage de l'orientation d'un rétroviseur du type comportant :
- au moins un moyen d'entraînement électrique comme un moteur électrique (3,4) ;
- un moyen de mesure (46) de la tension d'une batterie (Vbat), qui produit un signal (TDbat) représentatif de la tension batterie (Vbat) ;
- un moyen de mesure (7,8,CAN,47H,47V) des variations du couple résistant exercé sur ledit moteur, qui produit au moins un signal de mesure des variations de couple ;
- un panneau de commande accessible à un utilisateur, qui produit au moins un signal de commande de réglage (CMHA,CMVA) ;
qui sont connectés à un organe de commande (1), qui élabore au moins un signal de commande (CHD,CVD) des circuits d'alimentation (43,44) du ou des moteurs (3,4) sur la base d'une information de commande déterminée par ledit organe de commande (1), afin de régler l'alimentation dudit moyen d'entraînement (3,4), l'organe de commande (1) comportant au moins un moyen (50H,50V) pour déterminer le signal de commande sous la forme d'un signal en modulation en largeur d'impulsions, destiné à piloter des circuits d'alimentation (43,44) du ou des moteurs électriques, le facteur de forme de la modulation en largeur d'impulsions étant une fonction du signal de mesure de la tension batterie (TDbat) et du signal de mesure des variations de couple, l'organe de commande (1) comportant au moins une mémoire (42) dans laquelle sont enregistrées des tables de valeurs du facteur de forme adressables en fonction respectivement des variations de couple et de la valeur de la tension batterie (Vbat).

2. Dispositif de réglage selon la revendication 1, caractérisé en ce qu'une variation du couple résistant exercé sur le moteur (3,4) par l'ensemble des mécanismes du rétroviseur, est détectée par une variation contraire de la vitesse de déplacement d'une partie mobile du rétroviseur telle qu'un miroir (6) entraîné par ledit moteur, par rapport à une vitesse de déplacement prédéterminée.

3. Dispositif de réglage selon la revendication 2, caractérisé en ce que l'organe de commande (1) comporte un convertisseur analogique numérique (CAN) qui reçoit un signal de mesure de la position instantanée (RMHA,RMVA) du miroir (6), ce signal étant produit par au moins un capteur de position (7,8), et comporte un organe de calcul (47H,47V) qui produit une information de vitesse de déplacement du miroir (6) qui est communiquée à l'entrée d'un circuit (49H,49V) générateur d'un premier signal d'adressage mémoire pour accéder à une plage de valeurs du facteur de forme, destinées à fournir une tension d'alimentation au moteur (3, 4) qui produit un déplacement du miroir (6) à vitesse sensiblement constante, égale à ladite vitesse de déplacement prédéterminée, tant que le signal de commande considéré (CMHA,CMVD) est actif et tant qu'une condition de fin de course n'est pas vérifiée par l'organe de commande.

4. Dispositif de réglage selon la revendication 1 ou selon la revendication 2, caractérisé en ce que l'organe de commande (1) comporte un convertisseur analogique numérique (CAN) qui reçoit le signal (TDbat) représentatif de la tension batterie (Vbat) et qui produit un signal de mesure de la tension batterie (ACC1) qui est connecté à l'entrée d'un circuit (56) générateur d'un second signal d'adressage mémoire pour accéder à une plage de valeurs du facteur de forme destinées à fournir une tension d'alimentation au moteur (3, 4) qui soit indépendante de la valeur de la tension batterie (Vbat).

5. Dispositif de réglage selon la revendication 4, caractérisé en ce que les valeurs du facteur de forme de la modulation (PWM) suivent une loi décroissante avec la tension de la batterie (Vbat).

6. Dispositif de réglage selon la revendication 3, caractérisé en ce que les valeurs du facteur de forme de la modulation (PWM) suivent une loi décroissante avec les valeurs de la vitesse de déplacement du miroir (6).

7. Dispositif de réglage selon la revendication 6, caractérisé en ce que les variations de la vitesse de déplacement du miroir (6) du rétroviseur sont détectées par un test (21) consistant à vérifier si pendant un intervalle de temps déterminé, défini comme la durée nécessaire pour obtenir, à la vitesse de déplacement désirée, une variation de un bit de la valeur numérisée (RMVD,RMHD) de l'information de recopie (RMVA,RMHA) de la position du miroir (6) et qui est contrôlée par l'intermédiaire d'un convertisseur analogique/digital (CAN), ladite valeur numérisée (RMVD,RMHD) a effectivement varié de un bit.

8. Dispositif de réglage selon l'une quelconque des revendications précédentes, caractérisé en ce que le dispositif de réglage du rétroviseur comporte au moins un capteur (7,8) de la position du miroir (6) du rétroviseur par rapport à une partie fixe (5) dudit rétroviseur.

9. Dispositif de réglage selon la revendication 8, caractérisé en ce que le capteur (7,8) de la position du miroir (6) du rétroviseur, est un capteur de l'angle existant entre un axe dudit miroir (6) et un axe de ladite partie fixe (5) du rétroviseur, comme un potentiomètre dont la valeur résistive est liée à la valeur dudit angle.

10. Rétroviseur comportant un moyen d'entraînement électrique comme un rétroviseur d'automobile, du type comportant un dispositif de commande électrique permettant le positionnement du miroir (6) à une première vitesse dite vitesse rapide, sur deux positions distinctes qui sont, une première position dite position normale de marche avant, et une seconde position dite position de marche arrière, caractérisé en ce que le réglage de ces deux positions est effectué, à une seconde vitesse, dite vitesse lente car elle est plus lente que ladite première vitesse, par un dispositif de réglage selon l'une quelconque des revendications 1 à 9.

11. Rétroviseur selon la revendication 10, caractérisé en ce que le dispositif de commande du positionnement du rétroviseur comporte des moyens pour passer automatiquement de la position normale de marche avant à la position de marche arrière, et réciproquement.

12. Rétroviseur selon la revendication 11, caractérisé en ce qu'il comporte au moins un moyen de détection de l'enclenchement de la vitesse "Marche-Arrière", le passage de la position normale de marche avant à la position de marche arrière se faisant automatiquement dès que la vitesse "Marche-Arrière" est sollicitée par le conducteur, et, inversement, le passage de la position de marche arrière à la position normale de marche avant se faisant automatiquement dès que la vitesse "Marche-Arrière" n'est plus sollicitée.

## Claims

1. Apparatus for adjusting the orientation of a rear view mirror, of the type comprising:
- at least one electrical drive means such as an electric motor (3, 4);
- a means (46) for measuring the voltage of a battery (Vbat), which produces a signal (TDbat) representing the battery voltage (Vbat);
- a means (7, 8, ADC, 47H, 47V) for measuring variations in the reaction torque exerted on the said motor, which produces at least one signal of measurement of the torque variations;
- a control panel accessible to a user, which produces at least one adjustment control signal (CMHA, CMVA);
which are connected to a control unit (1) that produces at least one signal (CHD, CVD) for the control of the power supply circuits (43, 44) of the motor or motors (3, 4) based on an item of control information determined by the said control unit (1), whereby to adjust the power supply to the said drive means (3, 4), the control unit (1) including at least one means (50H, 50V) for determining the control signal, in the form of a pulse width modulation signal, for governing the power supply circuits (43, 44) of the electric motor or motors, the form factor of the pulse width modulation being a function of the battery voltage measurement signal (TDbat) and the torque variation measurement signal, the control unit (1) including at least one memory (42) in which are entered tables of values of the form factor, which can be addressed as a function of variations in the torque and in the value of the battery voltage (Vbat) respectively.

2. Adjusting apparatus according to Claim 1, characterised in that a variation in the reaction torque exerted on the motor (3, 4) by the aggregate of the mechanisms of the rear view mirror is detected by a contrary variation of the velocity of displacement of a moving part of the rear view mirror, such as a reflector (6) driven by the said motor, with respect to a predetermined displacement velocity.

3. Adjusting apparatus according to Claim 2, characterised in that the control unit (1) includes an analog/digital converter (ADC) which receives a signal (RMHA, RMVA) of measurement of the instantaneous position of the reflector (6), this signal being produced by at least one position sensor (7, 8), and includes a computing means (47H, 47V) which produces a signal representing the velocity of displacement of the reflector (6), which is communicated to the input of a circuit (49H, 49V) for generating a first memory address signal, for access to a range of values of the form factor which are such as to apply a power supply voltage to the motor (3, 4) that produces a displacement of the reflector (6) at a substantially constant velocity, equal to the said predetermined displacement velocity, so long as the control signal concerned (CMHA, CMVD) is activated, and so long as an end of travel condition has not been verified by the control unit.

4. An adjusting apparatus according to Claim 1 or Claim 2, characterised in that the control unit (1) comprises an analog/digital converter (ADC) which receives the signal (TDbat) representing the battery voltage (Vbat), and which produces a signal representing a measurement of the battery voltage (ACC1), which is applied to the input of a circuit (56) for generating a second memory address signal for access to a range of values of the form factor which are such as to apply to the motor (3, 4) a power supply voltage that is independent of the value of the battery voltage (Vbat).

5. Adjusting apparatus according to Claim 4, characterised in that the values of the form factor of the modulation (PWM) follow a law which decreases with the battery voltage (Vbat).

6. Adjusting apparatus according to Claim 3, characterised in that the values of the form factor of the modulation (PWM) follow a law which decreases with the values of the displacement velocity of the reflector (6).

7. Adjusting apparatus according to Claim 6, characterised in that the variations in the displacement velocity of the reflector (6) of the rear view mirror are detected by a test (21) which consists in verifying whether, during a predetermined time period, defined as the period of time necessary to obtain, at the desired displacement velocity, a variation of one bit in the value of the signal (RMVA, RMHA) which represents the position of the reflector (6) and which is put in digital form (RMVD, RMHD) under the control of an interposed analog/digital converter (ADC), the said digital value (RMVD, RMHD) has effectively varied by one bit.

8. Adjusting apparatus according to any one of the preceding Claims, characterised in that the apparatus for adjusting the rear view mirror includes at least one sensor (7, 8) for sensing the position of the reflector (6) of the rear view mirror with respect to a fixed part (5) of the said rear view mirror.

9. Adjusting apparatus according to claim 8, characterised in that the sensor (7, 8) for sensing the position of the reflector (6) of the rear view mirror is a sensor of the angle prevailing between an axis of the said reflector (6) and an axis of the said fixed part (5) of the rear view mirror, for example a potentiometer the value of the resistance of which is linked to the value of the said angle.

10. A rear view mirror having an electrical driving means, for example a motor vehicle rear view mirror, of the type including an electrical control unit for permitting positioning of the reflector (6) at a first velocity, referred to as a fast speed, in two distinct positions which consist of a first position, referred to as a normal forward travel position, and a second position referred to as a reverse travel position, characterised in that the adjustment of these two positions is effected, at a second velocity referred to as a slow speed since it is slower than the said first velocity, by an adjusting apparatus in accordance with any one of Claims 1 to 9.

11. A rear view mirror according to Claim 10, characterised in that the control unit for controlling the positioning of the rear view mirror includes means for passing automatically from the normal forward travel position to the reverse travel position and vice versa.

12. A rear view mirror according to Claim 11, characterised in that it includes at least one means for detecting activation of the "reverse travel" velocity, the shift from the normal forward travel position to the reverse travel position taking place automatically once the "reverse travel" velocity has been set by the driver, and, conversely, the shift from the reverse travel position to the normal forward travel position taking place automatically once the "reverse travel" velocity is no longer set.

## Patentansprüche

1. Regelungsvorrichtung für die Ausrichtung eines Rückspiegels, umfassend:
- mindestens ein elektrisches Antriebsmittel, wie etwa einen Elektromotor (3, 4);
- ein Meßmittel (46) zur Messung der Spannung einer Batterie (Vbat), das ein für die Batteriespannung (Vbat) repräsentatives Signal (TDbat) erzeugt;
- ein Meßmittel (7, 8, CAN, 47H, 47V) zur Messung der Veränderungen des auf den besagten Motor ausgeübten Widerstandsmoments, das mindestens ein Meßsignal für die Veränderungen des Widerstandsmoments erzeugt;
- eine für einen Benutzer zugängliche Bedientafel, die mindestens ein Steuersignal für die Regelung (CMHA, CMVA) erzeugt;
die an ein Steuerorgan (1) angeschlossen sind, das mindestens ein Steuersignal (CHD, CVD) für die Speiseschaltungen (43, 44) des oder der Motoren (3, 4) auf der Grundlage einer Steuerinformation erarbeitet, die durch das besagte Steuerorgan (1) bestimmt wird, um die Stromversorgung des besagten Antriebsmittels (3, 4) zu regeln, wobei das Steuerorgan (1) mindestens ein Mittel (50H, 50V) umfaßt, um das Steuersignal in Form eines pulsbreitenmodulierten Signals zu bestimmen, dessen Aufgabe darin besteht, Speiseschaltungen (43, 44) des oder der Elektromotoren anzusteuern, wobei der Formfaktor der Pulsbreitenmodulation eine Funktion des Meßsignals für die Batteriespannung (TDbat) und des Meßsignals für die Momentänderungen ist, wobei das Steuerorgan (1) mindestens einen Speicher (42) umfaßt, in dem in Abhängigkeit von den Momentänderungen bzw. vom Wert der Batteriespannung (Vbat) adressierbare Wertetabellen des Formfaktors abgespeichert sind.

2. Regelungsvorrichtung nach Anspruch 1,**dadurch gekennzeichnet,** daß eine Veränderung des durch die Gesamtheit der Mechanismen des Rückspiegels auf den Motor (3, 4) ausgeübten Widerstandsmoments durch eine gegenläufige Veränderung der Verstellgeschwindigkeit eines beweglichen Teils, etwa eines durch den besagten Motor angetriebenen Spiegeleinsatzes (6) im Verhältnis zu einer vorbestimmten Verstellgeschwindigkeit erfaßt wird.

3. Regelungsvorrichtung nach Anspruch 2,**dadurch gekennzeichnet,** daß das Steuerorgan (1) einen Analog/Digital-Wandler (CAN) umfaßt, der ein Meßsignal für die momentane Position (RMHA, RMVA) des Spiegeleinsatzes (6) empfängt, wobei dieses Signal durch mindestens einen Positionsgeber (7, 8) erzeugt wird, und ein Rechenorgan (47H, 47V) umfaßt, das eine Information zur Verstellgeschwindigkeit des Spiegeleinsatzes (6) erzeugt, die an den Eingang einer Schaltung (49H, 49V) zur Generierung eines ersten Speicheradressiersignals für den Zugriff auf einen Bereich von Werten des Formfaktors übertragen wird, deren Aufgabe darin besteht, dem Motor (3, 4) eine Speisespannung zu liefern, die eine Verstellung des Spiegeleinsatzes (6) mit einer in etwa konstanten Geschwindigkeit gleich der besagten vorbestimmten Verstellgeschwindigkeit erzeugt, solange das betrachtete Steuersignal (CMHA, CMVD) aktiv ist und solange nicht eine Endlagenbedingung durch das Steuersignal verifiziert wird.

4. Regelungsvorrichtung nach Anspruch 1 oder nach Anspruch 2, **dadurch gekennzeichnet**, daß das Steuerorgan (1) einen Analog/Digital-Wandler (CAN) umfaßt, der das für die Batteriespannung (Vbat) repräsentative Signal (TDbat) empfängt und der ein Meßsignal für die Batteriespannung (ACCl) erzeugt, das an den Eingang einer Schaltung (56) zur Generierung eines zweiten Speicheradressiersignals angeschlossen ist, um auf einen Bereich von Werten des Formfaktors zuzugreifen, deren Aufgabe darin besteht, dem Motor (3, 4) eine Speisespannung zu liefern, die unabhängig vom Wert der Batteriespannung (Vbat) ist.

5. Regelungsvorrichtung nach Anspruch 4,**dadurch gekennzeichnet,** daß die Werte des Formfaktors der Modulation (PWM) einem mit der Batteriespannung (Vbat) abnehmenden Verlauf folgen.

6. Regelungsvorrichtung nach Anspruch 3,**dadurch gekennzeichnet,** daß die Werte des Formfaktors der Modulation (PWM) einem mit den Werten der Verstellgeschwindigkeit des Spiegeleinsatzes (6) abnehmenden Verlauf folgen.

7. Regelungsvorrichtung nach Anspruch 6,**dadurch gekennzeichnet,** daß die Veränderungen der Verstellgeschwindigkeit des Spiegeleinsatzes (6) des Rückspiegels durch einen Test (21) erfaßt werden, der darin besteht, daß überprüft wird, ob während eines bestimmten Zeitintervalls, definiert als die erforderliche Dauer, um bei der gewünschten Verstellgeschwindigkeit eine Veränderung des digitalisierten und über einen Analog/Digital-Wandler (CAN) kontrollierten Werts (RMVD, RMHD) der Information zur Nachführung (RMVA, RMHA) der Position des Spiegeleinsatzes (6) um ein Bit herbeizuführen, der besagte digitalisierte Wert tatsächlich (RMVD, RMHD) um ein Bit verändert wurde.

8. Regelungsvorrichtung nach einem der vorangehenden Ansprüche , **dadurch gekennzeichnet**, daß die Regelungsvorrichtung des Rückspiegels mindestens einen Positionsgeber (7, 8) für die Position des Spiegeleinsatzes (6) des Rückspiegels im Verhältnis zu einem ortsfesten Teil (5) des besagten Rückspiegels umfaßt.

9. Regelungsvorrichtung nach Anspruch 8,**dadurch gekennzeichnet,** daß der Positionsgeber (7, 8) für den Spiegeleinsatz (6) des Rückspiegels ein Winkelgeber für den Winkel zwischen einer Achse des besagten Spiegeleinsatzes (6) und einer Achse des besagten ortsfesten Teils (5) des Rückspiegels ist, wie etwa ein Potentiometer, dessen Widerstandswert mit dem Wert des besagten Winkels zusammenhängt.

10. Rückspiegel mit einem elektrischen Anstriebsmittel, etwa ein Kraftfahrzeugrückspiegel, umfassend eine elektrische Betätigungsvorrichtung für die Positionierung des Spiegeleinsatzes (6) mit einer als Schnellbewegung bezeichneten ersten Geschwindigkeit in zwei verschiedenen Positionen, bei denen es sich um eine als normale Vorwärtsgangposition bezeichnete erste Position und eine als Rückwärtsgangposition bezeichnete zweite Position handelt,**dadurch gekennzeichnet**, daß die Regelung dieser beiden Positionen mit einer als Langsambewegung bezeichneten zweiten Geschwindigkeit, die langsamer als die besagte erste Geschwindigkeit ist, durch eine Regelungsvorrichtung nach einem der Ansprüche 1 bis 9 erfolgt.

11. Rückspiegel nach Anspruch 10, **dadurch gekennzeichnet,** daß die Betätigungsvorrichtung zur Positionierung des Rückspiegels Mittel für die automatische Umschaltung von der normalen Vorwärtsgangposition zur Rückwärtsgangposition und umgekehrt umfaßt.

12. Rückspiegel nach Anspruch 11, **dadurch gekennzeichnet**, daß er mindestens ein Mittel zur Erfassung des Einlegens des "Rückwärtsgangs" umfaßt, wobei die Umschaltung von der normalen Vorwärtsgangposition zur Rückwärtsgangposition automatisch erfolgt, sobald der "Rückwärtsgang" durch den Fahrer eingelegt wird, und wobei umgekehrt die Umschaltung von der Rückwärtsgangposition in die normale Vorwärtsgangposition automatisch erfolgt, sobald der "Rückwärtsgang" nicht mehr eingelegt ist.
